# EUROPEAN PATENT APPLICATION

(11) **EP 2 079 135 A2**
(43) Date of publication of application: **15.07.2009**
(21) Application number: 08017974.0
(22) Date of filing: 14.10.2008
(51) Int. Cl.: H01S 3/097

(54) **Abnormality detection method for gas laser oscillator and gas laser oscillator for implementing the method**

(30) Priority: 06.11.2007 JP 2007288582
(71) Applicant: Fanuc Ltd, Yamanashi 401-0597 (JP)
(72) Inventor: Ando, Minoru, c/o FANUC LTD., Yamanashi 401-0597 (JP); Ikemoto, Hajime, c/o FANUC LTD., Yamanashi 401-0597 (JP)
(74) Representative: Thum, Bernhard

(57) **Abstract**

A gas laser oscillator (1), which generates a laser beam by exciting laser gas in discharge tubes (7) with a laser power supply (4) and detecting an abnormality thereof, includes a storage unit (12) for storing the relationship between the output command and the DC current of the laser power supply (4) during the normal operation of the oscillator (1), an output command generating unit (13) for generating an output command corresponding to the peak current value in the relationship between the output command and the DC current, a current detection unit (19) for detecting the current during the operation of the laser power supply (4) based on the output command in the standby operation mode of the gas laser oscillator (1), and an abnormality judging unit (15) for judging that the discharge load of the gas laser oscillator (1) has an abnormality based on the detection current detected by the current detection unit (19) and the peak value of the current in the relationship between the output command and the DC current. In this way, the abnormality of the discharge load of the discharge tubes (7) can be easily and safely detected. The gas laser oscillator further desirably includes a stop unit for stopping the gas laser oscillator when the discharge load is judged as abnormal.

## Description

### BACKGROUND OF THE INVENTION

### 1. Field of the Invention

This invention relates to an abnormality detection method for detecting an abnormality of the discharge load of a gas laser oscillator and the gas laser oscillator for carrying out the method.

### 2. Description of the Related Art

A gas laser oscillator for producing laser output by exciting a gas is desirably operated with a normal, stable discharge load. For this purpose, a technique for determining and analyzing a laser gas composition in a discharge tube of a gas laser oscillator has been developed.

Japanese Unexamined Patent Publication No. 7-221378 discloses a method in which the optimum matching between a laser power supply and a discharge load is obtained by combining the phases of a current and a high-frequency voltage for the discharge load. In Japanese Unexamined Patent Publication No. 7-221378, no peak current exists in the voltage-current relationship of the laser power supply, since the phases of a high-frequency voltage and a current are combined with each other.

In the method disclosed by Japanese Unexamined Patent Publication No. 7-221378, high-frequency voltage is controlled with respect to the change in the discharge load. Therefore, even in the case where an abnormality of the discharge load (such as an abnormality of the laser gas) generates after discharge, the change in the voltage-current relationship can be reduced by adjusting the matching. However, it is difficult, to detect the abnormality of the discharge load at the time of discharge in case of Japanese Unexamined Patent Publication No. 7-221378.

Further, according to the method disclosed by Japanese Unexamined Patent Publication No. 7-221378 in which the matching is adjusted, it is difficult to detect the abnormality of the discharge in the case where the change that has occurred is not adequate to extinguish the discharge.

This invention has been achieved in view of this situation, and the object thereof is to provide an abnormality detection method of a gas laser oscillator and the gas laser oscillator for carrying out the method in which the abnormality of the discharge load can be detected easily and safely.

### SUMMARY OF THE INVENTION

In order to achieve the object described above, according to a first aspect of the invention, there is provided a gas laser oscillator which generates a laser beam by exciting the laser gas in a discharge tube with a laser power supply and which detects an abnormality of itself, comprising a storage means for storing the relationship between the output command and the DC current of the laser power supply in the normal operation of the gas laser oscillator, an output command generating means for generating an output command corresponding to the peak value of the DC current in the relationship between the output command and the DC current, a current detection means for detecting the DC current during operation of the laser power supply based on the output command in the standby operation mode of the gas laser oscillator, and an abnormality judging means for judging that the discharge load of the gas laser oscillator has an abnormality, based on the detection current detected by the current detection means and the peak value of the DC current in the relationship between the output command and the DC current.

According to a second as aspect of the invention, there is provided a gas laser oscillator as in the first aspect, wherein the abnormality judging means judges that the discharge load of the gas laser oscillator has an abnormality in the case where the difference between the detection current detected by the current detection means and the peak value of the DC current in the relationship between the output command and the DC current is not less than a predetermined threshold value.

According to a third aspect of the invention, there is provided a gas laser oscillator as in the first aspect, wherein the abnormality judging means judges that the discharge load of the gas laser oscillator has an abnormality in the case where the detection current detected by the current detection means is not less than the product of a predetermined coefficient larger than unity and the peak value of the DC current in the relationship between the output command and the DC current.

According to a fourth aspect of the invention, there is provided a gas laser oscillator in any one of the first to third aspects, further comprising a stop means for stopping the gas laser oscillator in the case where the abnormality judging means judges that the discharge load has an abnormality.

According to a fifth aspect of the invention, there is provided an abnormality detection method for detecting an abnormality of the gas laser oscillator for generating a laser beam by a laser power supply exciting the laser gas in the discharge tube, comprising the steps of storing the relationship between the output command and the DC current of the laser power supply in the normal operation of the gas laser oscillator, generating an output command corresponding to the peak value of the current in the relationship between the output command and the DC current, detecting the DC current by a current detection means during operation of the laser power supply based on the output command in the standby operation mode of the gas laser oscillator, and judging that the discharge load of the gas laser oscillator has an abnormality based on the detection current detected by the current detection means and the peak value of the current in the relationship between the output command and the DC current.

According to a sixth aspect of the invention, there is provided an abnormality detection method in the fifth aspect, wherein the discharge load of the gas laser oscillator is judged to have an abnormality in the case where the difference between the detection current detected by the current detection means and the peak value of the DC current in the relationship between the output command and the DC current is not less than a predetermined threshold value.

According to a seventh aspect of the invention, there is provided an abnormality detection method in the fifth aspect, wherein the discharge load of the gas laser oscillator is judged to have an abnormality in the case where the detection current detected by the current detection means is not less than the product of a predetermined coefficient larger than unity and the peak value of the DC current in the relation between the output command and the DC current.

According to an eighth aspect of the invention, there is provided an abnormality detection method in any one of the fifth to seventh aspects, wherein the gas laser oscillator is stopped in the case where the discharge load judged to have an abnormality.

The above and other objects, features and advantages of the invention will be made apparent by the detailed description of typical embodiments of the invention taken in conjunction with the accompanying drawings.

### BRIEF DESCRIPTION OF THE DRAWINGS

Fig. 1 is a schematic diagram showing a general configuration of the gas laser oscillator of which the abnormality is detected by the abnormality detection method according to this invention.
Fig. 2 is a flowchart showing the operation in the abnormality detection method according to the invention.
Fig. 3 is a diagram showing the relationship between the laser output command and the DC current of the laser power supply.
Fig. 4a is a flowchart showing an abnormality judging method according to a first embodiment of the invention.
Fig. 4b is a flowchart showing an abnormality judging method according to a second embodiment of the invention.

### DETAILED DESCRIPTION

An embodiment of the invention is explained below with reference to the accompanying drawings. In the drawings, similar members are designated by similar reference numerals, respectively. To facilitate understanding, the drawings have been appropriately changed in scale.

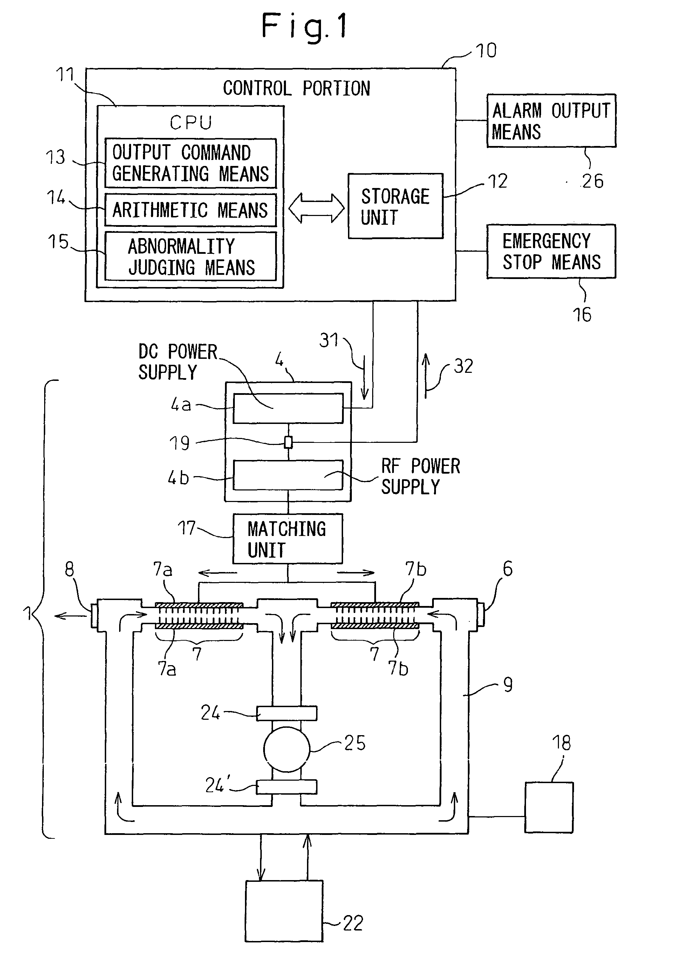

Fig. 1 is a schematic diagram showing a general configuration of the gas laser oscillation system for carrying out the abnormality detection method according to this invention. As shown in Fig. 1, the gas laser oscillation system is configured of a gas laser oscillator 1 and a control portion 10 connected to the gas laser oscillator 1. Further, the control portion 10 is connected to a laser machine (not shown). The laser beam output from the gas laser oscillator 1 is input to the laser machine (not shown) and used to cut the workpiece (not shown).

The gas laser oscillator 1 is of inductive discharge excitation type having a comparatively high output such as a CO₂ laser of not less than 1 kW. The gas laser oscillator 1 includes a gas blow pipe 9 connected to a laser gas pressure control system 18. The laser gas pressure control system 18 can supply the laser gas to the gas blow pipe 9 and exhaust the laser gas from the gas blow pipe 9. Therefore, the gas blow pipe 9 is normally filled with the laser gas.

As shown, one end of the gas blow pipe 9 has a rear mirror (total reflector) 6 having substantially no partial transmissivity, while the other end of the gas blow pipe 9 has an output mirror (partial reflector) 8 having the partial transmissivity.

Discharge tubes 7 are arranged between the rear mirror 6 and the output mirror 8. As shown, the discharge electrode pairs 7a, 7b of the discharge tubes 7 are of the same size and coated with ceramic. Also, a discharge section is formed between the discharge electrodes 7a and between the discharge electrodes 7b.

As shown in Fig. 1, the discharge electrode pairs 7a, 7b are connected to a laser power supply 4 through a matching unit 17. The laser power supply 4 is configured of a DC power supply 4a (DC power supply unit) and a RF power supply 4b (radio-frequency power supply unit). The laser power supply 4 supplies the radio-frequency power to the discharge electrode pairs 7a, 7b through the matching unit 17 in accordance with the output command from the control portion 10. Further, a current detection unit 19 for detecting the output current A of the DC power supply 4a is arranged between the DC power supply 4a and the RF power supply 4b.

Further, as shown in Fig. 1, a blower 25 is arranged on the gas blow pipe 9, and heat exchangers 24, 24' are arranged upstream and downstream, respectively, of the blower. Furthermore, the gas laser oscillator 1 is connected to a cooling water circulation system 22 thereby to cool the laser gas, etc., appropriately in the gas blow pipe 9.

As known, when the radio-frequency power is supplied to the discharge electrode pairs 7a, 7b by the laser power supply 4, the laser gas in the discharge tubes 7 is excited by the discharge and the light is generated in the discharge sections. This light is repeatedly reflected between the output mirror 8 and the rear mirror 6, while part of the light is output as a laser beam from the output mirror 8.

The control portion 10 is a digital computer including a CPU 11 and a storage unit 12 as main parts. As shown, the CPU 11 has the functions as an output command generating means 13 for generating an output command 31, an arithmetic means 14 for performing the various arithmetic operations described later and an abnormality judging means 15 for judging whether the gas laser oscillator 1 has an abnormality in accordance with the result of the arithmetic operation of the arithmetic means 14.

Furthermore, the storage unit 12 is configured of a ROM or a RAM to store various data, such as threshold values and programs. Further, as shown, an emergency stop means 16 for stopping the gas laser oscillator 1 and an alarm output means 26 for outputting an alarm when a fault is detected are connected to the control portion 10.

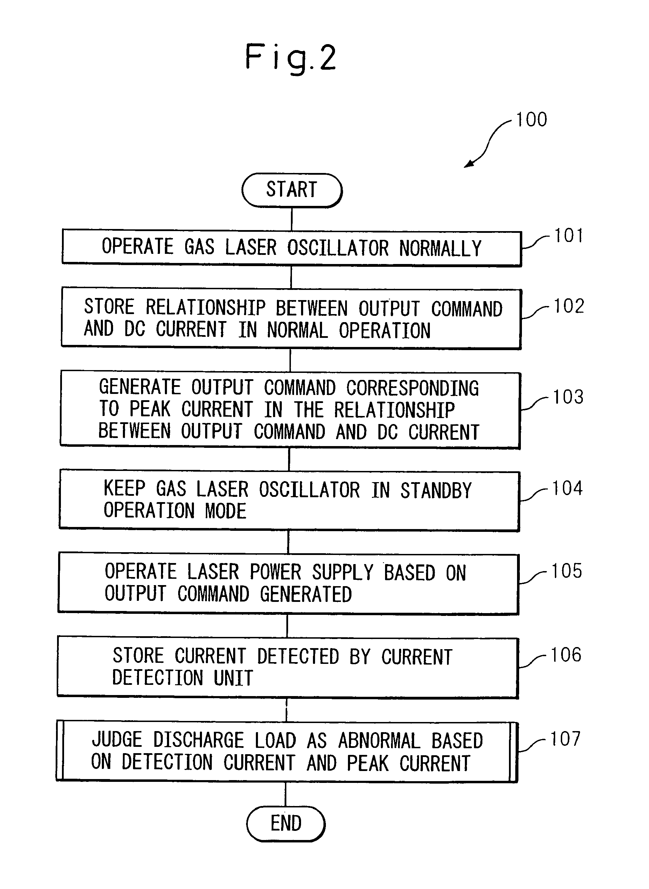

Fig. 2 is a flowchart showing the operation program of the abnormality detection method according to this invention. With reference to Fig. 2, the abnormality detection operation according to the invention is explained. First, in step 101 of the operation program 100, the gas laser oscillator 1 is operated in normal operation. Then, in step 102, the relationship between the output command 31 in normal operation and the current A of the DC power supply unit 4a detected by the current detection unit 19, i.e. the relationship XO between the output command and the DC current (the matching characteristic between the laser power supply and the discharge load) is recorded. The relationship XO between the output command and the DC current is stored in the storage unit 12 of the control portion 10. Incidentally, in this specification, the discharge load is assumed to include all of the discharge tubes 7, the discharge electrode pairs 7a, 7b and the laser gas flowing in the discharge tubes 7.

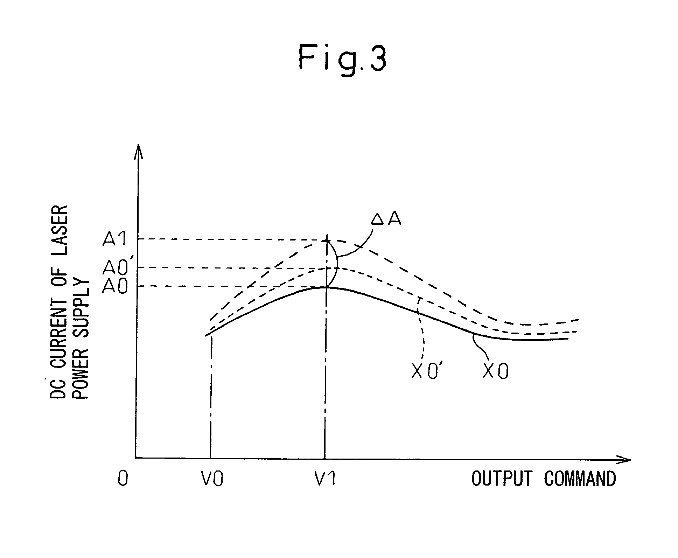

Fig. 3 is a diagram showing the relationship between the laser output command and the DC current of the laser power supply. In Fig. 3, the abscissa represents the output command 31, and the ordinate represents the DC current A of the laser power supply. According to this invention, the frequency for discharge excitation and the matching constant are each set to a predetermined value. Therefore, during the normal operation of the gas laser oscillator 1, the voltage-current relationship XO is no flat as shown in Fig. 3, and includes the peak current AO (maximum value) at certain voltage V1.

Then, in step 103, the output command generating means 13 of the control portion 10 generates the output command V1 corresponding to the peak current AO. After that, the gas laser oscillator 1 is switched from normal operation to standby operation (step 104). In this specification, the standby operation is defined as the operational state of the gas laser oscillator 1 with the workpiece machining operation of the laser machine (not shown) temporarily suspended. During the standby operation, the output command is reduced to the voltage V0 not corresponding to the peak current A0 (see Fig. 3), with the result that no laser beam is output from the output mirror 8.

Referring again to Fig. 2, in step 105, the control portion 10 supplies the output command V1 to the laser power supply 4, so that the laser power supply 4 operates based on the output command V1. In the process, the current A of the DC power supply unit 4a is detected as a detection current A1 by the current detection unit 19. The detection current A1 is stored in the storage unit 12 of the control portion 10 (step 106).

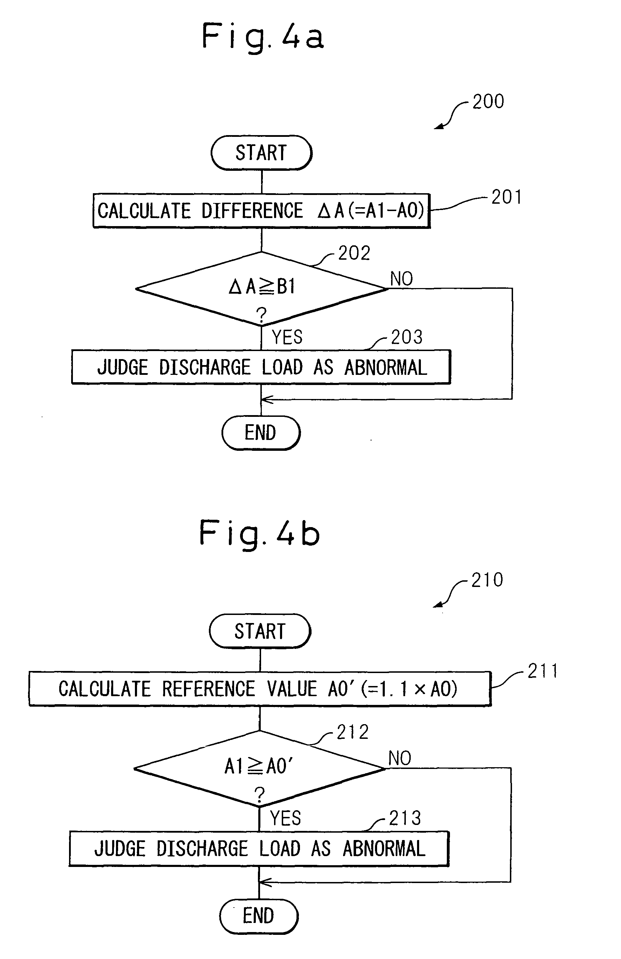

After that, in step 107, the abnormality judgment means 15 of the control portion 10 judges whether the discharge load is abnormal. Fig. 4a is a flowchart showing the abnormality judgment method according to a first embodiment of the invention. As shown in step 201 of the operation program 200 in Fig. 4a, the arithmetic means 14 first calculates the difference ΔA (= A1 - A0) between the detection current A1 and the peak current A0 in the relationship X0 between the output command and the DC current. Then, the abnormality judgment means 15 judges whether the difference ΔA is not less than a predetermined threshold value B1 or not. In the case where the difference ΔA is not less than the predetermined threshold value B1, in step 203, it is judged that the discharge load has an abnormality and ends the process. On the contrary, in the case where the difference ΔA is not less than the predetermined threshold value B1, the discharge load is not judged as abnormal.

In the abnormality judgment method according to a second embodiment shown in Fig. 4b, as shown in step 211 of the operation program 210, the arithmetic means 14 first multiplies the peak current A0 by a predetermined coefficient k (k > 1. k = 1.1 in Fig. 4b) to calculate a reference value AO' (= k x A0). Then, the abnormality judgment means 15 judges whether the detection current A1 is not less than the reference value AO'. In the case where the detection current A1 is not less than the reference value AO', in step 213, it is judged that the discharge load has an abnormality and ends the process. On the contrary, in the case where the detection current A1 is less than the reference value AO', the discharge load is not judged as abnormal.

As described above, according to this invention, the discharge load is judged to have an abnormality in the case where the detection current A1 is larger than the peak current A0 by a threshold value B1 or larger than the reference value A0' of the peak current A0. The reason is based on the estimation that in the case where the detection current A1 increases, the air or moisture flows into the discharge tubes 7 or the gas blow pipe 9 due to the breakage of the seal portion of the discharge tubes 7 or the gas blow pipe 9 resulting in a change of the composition of the laser gas in the discharge tubes 7. Further, an increased detection current A1 indicates the possibility that the discharge electrode pair 7a, 7b are deteriorated.

According to this invention, an abnormality of the discharge load is judged based on the detection current A1 and the peak current A0 as described above. In other words, according to this invention, an abnormality of the discharge load can be detected easily and safely without using a special measuring instrument.

In the case where the abnormality judgment means 15 judges that the discharge load has an abnormality, the emergency stop means 16 may stop the gas laser oscillator 1 as an emergency. In this way, the operation of the gas laser oscillator 1 in abnormal state can be avoided.

As another alternative, whenever the abnormality judgment means 15 judges that the discharge load has an abnormality, an alarm may be output from the alarm output means 26. In this way, the abnormality of the discharge load can be notified to the operator.

In the first aspect, the presence or absence of an abnormality of the discharge load is judged using the detection current when the output command corresponding to the peak current stored in advance is applied. As a result, an abnormality of the discharge load can be detected easily and safely.

In the second aspect of the invention, an abnormality of the discharge load can be detected by a comparatively simple method.

In the third aspect, the abnormality of the discharge load can be detected with a comparatively simple method. Incidentally, the predetermined coefficient larger than unity is, for example, 1.1 and may be another value.

In the fourth aspect, the gas laser oscillator is stopped in the case where an abnormality is detected, and therefore, the operation of the gas laser oscillator in a faulty state can be avoided.

In the fifth aspect, the presence or absence of an abnormality of the discharge load is judged using the detection current when the output command corresponding to the peak current stored in advance is applied. Therefore, the abnormality of the discharge load can be detected easily and safely.

In the sixth aspect, the abnormality of the discharge load can be detected with a comparatively simple method.

In the seventh aspect, the abnormality of the discharge load can be detected with a comparatively simple method. Incidentally, the predetermined coefficient larger than unity is, for example, 1.1 and may be any other values.

In the eighth aspect, the gas laser oscillator is stopped when the discharge load is judged as abnormal, and therefore, the operation of the gas laser oscillator in an abnormal state is avoided.

This invention has been explained above with reference to typical embodiments. It will be understood to those skilled in the art that various changes, omission or additions are possible in addition to the changes described above without departing from the scope of the invention.

## Claims

1. A gas laser oscillator (1) for generating a laser beam by exciting the laser gas in discharge tubes (7) with a laser power supply (4) and detecting an abnormality of said gas laser oscillator, comprising:
a storage means (12) for storing the relationship between the output command and the DC current of said laser power supply (4) during the normal operation of said gas laser oscillator (1);
an output command generating means (13) for generating an output command corresponding to the peak value of the current in the relationship between said output command and said DC current;
a current detection means (19) for detecting the DC current during the operation of said laser power supply (4) based on the output command in the standby operation mode of said gas laser oscillator (1); and
an abnormality judging means (15) for judging that the discharge load of said gas laser oscillator (1) has an abnormality, based on the detection current detected by said current detection means (19) and the peak value of the DC current in the relationship between said output command and said DC current.

2. The gas laser oscillator (1) according to claim 1,
wherein said abnormality judging means (15) judges that the discharge load of said gas laser oscillator (1) has an abnormality in the case where the difference between the detection current detected by said current detection means (19) and the peak value of the DC current in the relationship between said output command and said DC current is not less than a predetermined threshold value.

3. The gas laser oscillator (1) according to claim 1,
wherein said abnormality judging means (15) judges that the discharge load of the gas laser oscillator (1) has an abnormality in the case where the detection current detected by said current detection means (19) is not less than the product of a predetermined coefficient larger than unity and the peak value of the DC current in the relationship between said output command and said DC current.

4. The gas laser oscillator (1) according to any one of claims 1 to 3, further comprising:
a stop means (16) for stopping said gas laser oscillator (1) in the case where the abnormality judging means (15) judges that the discharge load has an abnormality.

5. A method of detecting an abnormality of a laser gas oscillator for generating a laser beam by exciting the laser gas in discharge tubes (7) with a laser power supply (4), comprising the steps of:
storing the relationship between said output command and said DC current of said laser power supply (4) during the normal operation of said gas laser oscillator (1);
generating an output command corresponding to the peak value of the DC current in the relationship between said output command and said DC current;
detecting the DC current by a current detection means (19) during the operation of said laser power supply (4) based on the output command in the standby operation mode of said gas laser oscillator (1); and
judging that the discharge load of said gas laser oscillator (1) has an abnormality, based on the detection current detected by said current detection means (19) and the peak value of said DC current in the relationship between said output command and said DC current.

6. The abnormality detection method according to claim 5,
wherein the discharge load of said gas laser oscillator (1) is judged to have an abnormality in the case where the difference between the detection current detected by said current detection means (19) and the peak value of said DC current in the relationship between said output command and said DC current is not less than a predetermined threshold value.

7. The abnormality detection method according to claim 5,
wherein the discharge load of said gas laser oscillator (1) is judged to have an abnormality in the case where the detection current detected by said current detection means (19) is not less than the product of a predetermined coefficient larger than unity and the peak value of said DC current in the relationship between said output command and said DC current.

8. The abnormality detection method according to any one of claims 5 to 7,
wherein said gas laser oscillator (1) is stopped in the case where the discharge load is judged to have an abnormality.
